# EUROPEAN PATENT SPECIFICATION

(11) **EP 1 527 943 B1**
(45) Date of publication and mention of the grant of the patent: **02.08.2006**
(21) Application number: 04077969.6
(22) Date of filing: 28.10.2004
(51) Int. Cl.: B60N 2/02, B60N 2/07

(54) **Seat slide device for a vehicle**
Sitzgleitschienen-Vorrichtung für ein Fahrzeug
Glissière de siège pour un véhicule

(30) Priority: 30.10.2003 JP 2003371027
(43) Date of publication of application: 04.05.2005
(73) Proprietor: AISIN SEIKI KABUSHIKI KAISHA, Kariya-shi, Aichi-ken 448-8650 (JP)
(72) Inventor: Moriyama, Genta c/o Aisin Seiki Kabushiki Kaisha, Kariya-shi, Aichi-ken 448-8650 (JP)
(74) Representative: Marshall, John Grahame

(56) References cited:
- US-A- 3 184 209
- US-A- 5 046 697
- US-A- 5 586 740
- US-A1- 2003 168 566

## Description

### FIELD OF THE INVENTION

This invention generally relates to a device for adjusting the position of a vehicle seat in the backwards and forwards direction. More particularly, the invention pertains to a seat slide device which provides enough foot space under a front vehicle seat for a rear passenger.

### BACKGROUND

A known seat slide device disclosed in US5586740B2 includes a guide rail, fixed to a vertical portion of the vehicle floor, which extends in the longitudinal direction of the vehicle seat and a slide rail, fixed to the side of the vehicle seat, which is slidably guided by said guide rail. The assembly formed by said guide rail being engaged with said slide rail has a width in the horizontal direction perpendicular to the longitudinal direction of said assembly which is substantially less than the height of said assembly in the vertical direction. Thus this seat slide device can give substantial space under the vehicle seat, which may be enough, for example, for providing foot space for a rear passenger.

According to this known seat slide device, a drive member, rotatably supported by the slide rail, is provided outside the space formed between the guide rail and the slide rail. Thus a driven engaging portion, which is to be engaged with the drive member and formed at a fixed vertical side wall of the guide rail, is exposed toward the space under the seat.

A need therefore exists for a seat slide device which not only provides substantial foot space for a rear passenger, but also prevents any driven engaging portions from being exposed in said foot space.

### SUMMARY OF THE INVENTION

The invention provides a seat slide device having the features according to the preamble of claim 1, see US-A-5046697, and the features of the characterising portion of claim 1.

In such a configuration, the assembly comprising the guide rail and the engaged slide rail is small enough in width so as to be able to provide enough space under the seat for the feet of a rear passenger. Furthermore the drive member is completely housed in the space formed between the guide rail and the slide rail, as is the driven engaging portion which is engaged with, and slides relative to, the drive member and to which lubricating grease is applied. Thus passengers' clothes cannot be soiled by contact with lubricating grease applied to the driven engaging portion.

The guide rail preferably includes a fixed vertical side wall and flange portions at the upper and lower extremes of said vertical side wall which extend horizontally in the same direction perpendicular to the longitudinal direction of said guide rail. The driven engaging portion is thus provided at said fixed side vertical wall. Thus soiling of passengers' clothes by contact with the driven engaging portion is further prevented.

The seat slide device preferably further comprises a cover, which may include a cap which covers the space between the guide rail and engaged slide rail at the rear of the device, thereby giving the seat slide device a more aesthetically pleasing appearance for a rear passenger.

According to the invention the drive member is engaged with the driven member through a slide member. This slide member may be made of a low friction material such as resin. Therefore the use of lubricating grease on either the drive member or the driven engaging portion can be minimized, or even dispensed with entirely.

The drive member may be urged by a biasing member against the driven engaging portion. Thus, the seat is tightly secured in position and no lateral movement of the seat can occur.

A plurality of bearing members, through which the guide rail is engaged with the slide rail, is preferably provided in a bearing track. Said bearing track is formed from the assembly of the guide rail and engaged slide rail while being separate from the space in said assembly which contains the drive member. Thus a sufficient amount of lubricating grease which gives a smooth slide of the seat slide device can be applied to the bearing track without soiling the drive member.

Preferably there is a horizontal connecting member perpendicular to the slide rail. The horizontal connecting member functions as reinforcement to the vehicle and helps prevent any deformation of the vehicle caused by excessive loads applied in a direction parallel to its length.

### BRIEF DESCRIPTION OF THE DRAWINGS

The foregoing and additional features and characteristics of the present invention will become more apparent from the following detailed description considered with reference to the accompanying drawings, wherein:
Fig. 1 is a perspective view of a seat slide device according to the present invention;
Fig. 2 is an exploded perspective view of the seat slide device of Fig. 1;

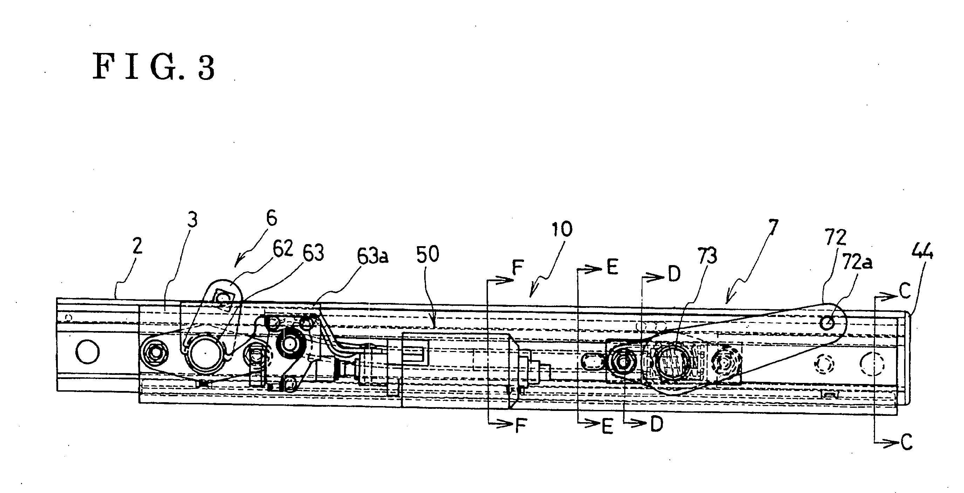

Fig. 3 is a cross section of the seat slide device along the line A-A in Fig. 1;
Fig. 4 is a cross section of the seat slide device along the line B-B in Fig. 1;
Fig. 5 is a cross section of the seat slide device along the line C-C in Fig. 3;
Fig. 6 is a cross section of the seat slide device along the line D-D in Fig. 3;
Fig. 7 is a cross section of the seat slide device along the line E-E in Fig. 3;
Fig. 8 is a cross section of the seat slide device along the line F-F in Fig. 3, and
Fig. 9 is a front view of the seat slide device according to Fig. 1.

### DETAILED DESCRIPTION

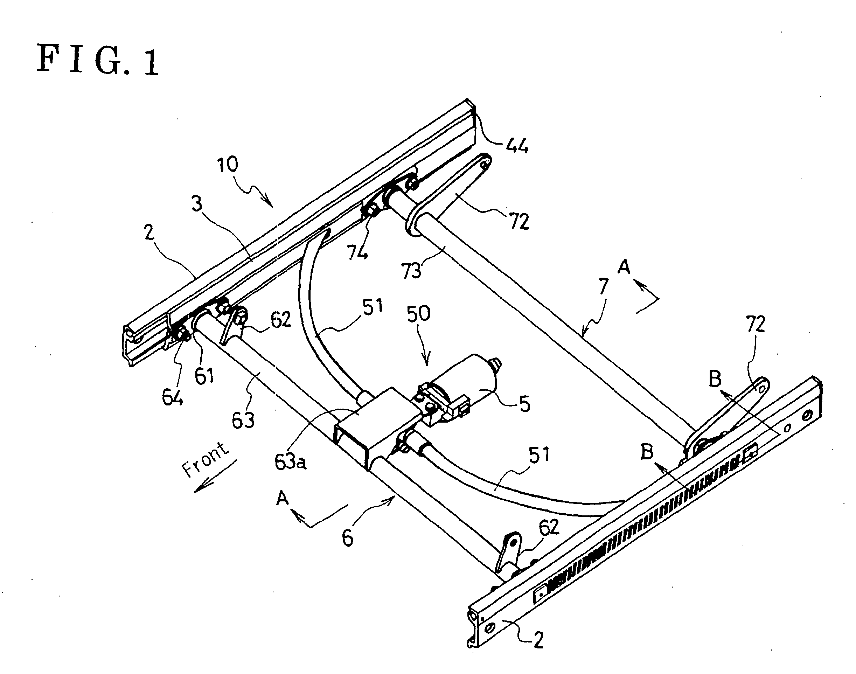

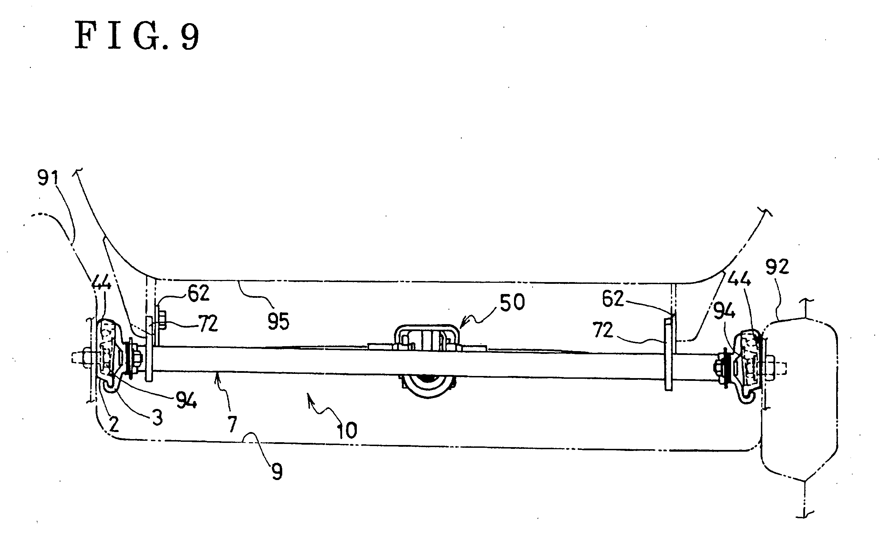

An embodiment of the present invention will be explained hereinbelow referring to the attached drawings. As shown in Figs. 1, 2 and 9, a seat slide device 10 according to the present invention includes a guide rail 2 secured to the vehicle floor 9 and a slide rail 3, engaged with the guide rail 2 so as to be slidably guided thereby, and secured to a seat 95 (shown in Fig. 9). The slide rail 3 extends in the longitudinal direction of the seat 95. A pair of slide rails 3 are provided, one at each of the left and right sides of the seat 95, as shown in Fig.9. They are firmly connected together by a front connecting member 6 substantially consisting of a first pipe 63 and a rear connecting member 7 substantially consisting of a second pipe 73. The front side of the seat 95 is secured, by attaching means, to two front arms 62 which are fixed to the first pipe 63. The rear side of the seat 95 is secured by attaching means to two rear arms 72 which are fixed to the second pipe 73. Both of the assemblies formed from a guide rail 2 and engaged slide rail 3 have a height greater than their width perpendicular to their longitudinal direction, giving both a high stiffness against load applied in the vertical direction.

The seat slide device 10 further includes a drive device 50 for adjusting the position of the seat 95 in the longitudinal direction thereof by sliding the slide rail 3 relative to the guide rail 2. The drive device 50 is attached at the first pipe 63 with a bracket 63a and includes a drive source 58, whose main component is an electric motor 5 and a drive screw 55 connected to the drive source 58 with a drive cable 52. The drive screw 55 is rotatably supported by the slide rail 3 as described later.

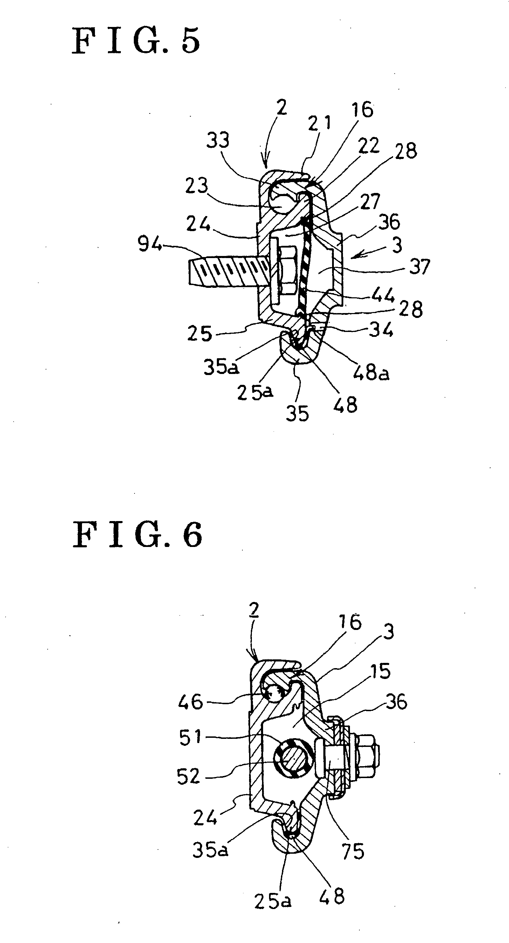

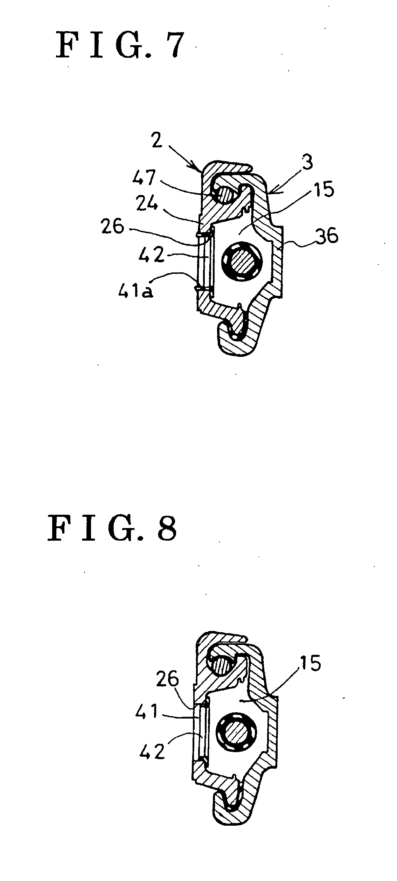

As shown in Figs. 5 to 8, there is formed an inner vertical wall 36 of the slide rail 3 to which the front connecting member 6 and the rear connecting member 7 are attached. The upper and lower end portions of the inner vertical wall 36 extend horizontally inwards, thereby forming an upper hem slide flange 33 and a lower hem slide flange 35 respectively. The extreme inner end of the lower hem slide flange 35 further extends upwards thereby forming a U-shaped groove 35a between the lower hem side flange 35 and the inner vertical wall 36. As shown in Fig. 5, the vertical length of the slide rail 3 from the bottom surface of the lower hem slide flange 35 to the top surface of the upper hem slide flange 33 is greater than the horizontal length of the slide rail 3 from the inner vertical wall 36 to the extreme end of either the lower hem slide flange 35 or the upper hem slide flange 33. Thus the slide rail 3 has stiffness against load applied in the vertical direction, which is greater than the stiffness against load applied in the horizontal direction that is perpendicular to their longitudinal direction.

As also shown in Figs. 5 to 8 the guide rail 2 to be engaged with the slide rail 3 includes an outer vertical wall 24 whose upper and lower end portions extend horizontally inwards so as to form an upper hem guide flange 21 and a lower hem guide flange 25 respectively. The guide rail 2 further comprises a holder flange 22 as shown in Fig. 5 which is positioned so that a small bearing track 23 is formed between the holder flange 22 and the upper hem guide flange 21. An opening 16 is formed at the right portion of the bearing track 23 as shown in Fig. 5 and Fig.6.

As show in Fig. 5, the end portion of the lower hem guide flange 25 further extends downward to form a slide convex portion 25a. The vertical length of the guide rail 2 from the lower hem guide flange 25 to the upper hem guide flange 21 is greater than the horizontal length of the guide rail 2 from the outer side vertical portion 24 to the extreme end of either the lower hem guide flange 25 or the upper hem guide flange 21. Thus the guide rail 2 also has stiffness against load applied in the vertical direction which is greater than the stiffness against load applied in horizontal direction perpendicular to its longitudinal direction.

A slide shoe 48 is positioned on the upper face of the U-shaped groove 35a of the guide rail 2 such that when the slide rail 3 is engaged in the guide rail 2 the slide shoe 48 is located between the U-shaped groove 35a of the guide rail 2 and the slide convex portion 25a of the slide rail 3.

In addition, a plurality of bearing members 46 are provided inside the bearing track 23 so as to facilitate the sliding of the slide rail 3 on the guide rail 2. In the assembled seat slide device 10 the bearing members 46 are sandwiched in the vertical direction by the inner bottom wall of the bearing track 23 and the upper hem slide flange 33 of the slide rail 3 so as to be rolled therebetween. In such a configuration, when a load is applied from the seat 95 on to the slide rail 3, the load is transmitted via the upper hem slide flange 33, to the guide rail 2 through the bearing members 46 and finally down to the floor 9 of the vehicle. It is preferable that the bearing members 46 are sufficiently greased so as to produce a smooth slide operation even when a large load is applied to the seat slide device 10 through the seat 95 by the passenger. However passengers' clothes will not get soiled with this grease as the bearing members 46 are enclosed in the bearing track 23 which has only a small opening 16.

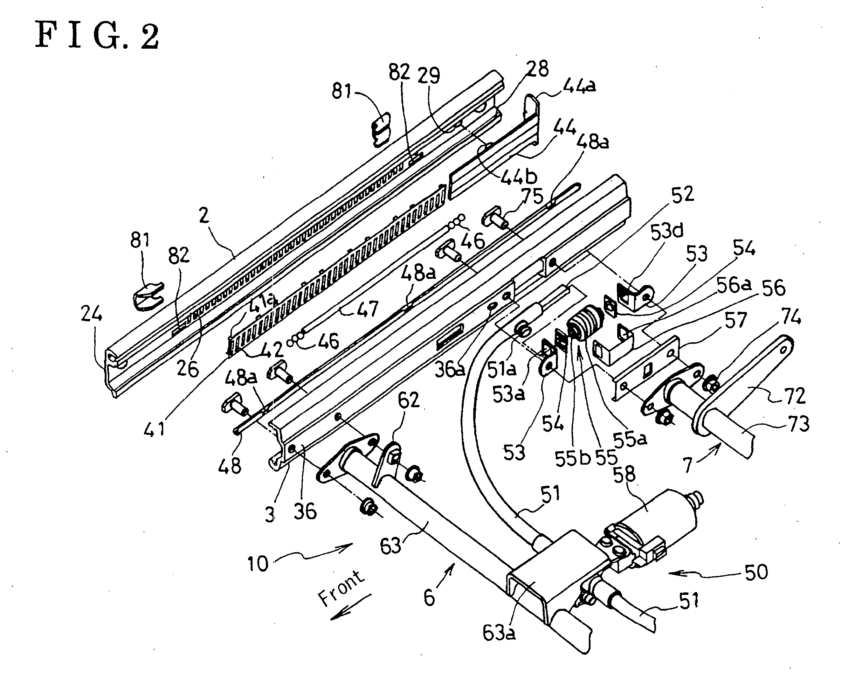

As shown in Fig.6 lateral movement of the slide rail 3 relative to the guide rail 2 is limited due to the slide convex portion 25a of the guide rail 2 being engaged with the U-shaped groove 35a of the slide rail 3. Furthermore the structure of the seat slide device 10 is such that the passenger's load and the load of the seat 95 are not applied to the slide shoe 48. Thus the slide convex portion 25a of the guide rail 2 is engaged with and can slide on the slide shoe 48 smoothly without the application of any lubrication to the slide shoe 48. Additionally, as shown in Fig.2 and Fig.5, the slide shoe 48 has a plurality of protruding fixing means 48a which fit into a plurality of holes 34 formed in the slide rail 3 so as to secure said slide shoe 48 in position. If the guide rail 2 and the slide rail 3 are made of a light metal or alloy such as aluminum, the slide shoe 48 would be made of a steel plate in order to obtain enough abrasive endurance. In such a configuration, there is no need to apply the grease to the slide convex portion 25a of the guide rail 2.

As shown in Fig. 2, the plurality of bearing members 46 are divided into two groups, the two groups being separated by a separator 47 which is also housed in the bearing track 23.

As shown in Fig.5 to Fig.8 the shape of the slide rail 3 and the guide rail 2 are such that when the slide rail 3 is engaged in the guide rail 2 a space 15 is formed between their respective vertical side walls 36 and 24, below the holder flange 22 of the slide rail 3 and above the lower hem guide flange 25 of the guide rail 2. The drive screw 55 is provided in this space 15 in such a manner that the rotation axis of the drive screw 55 extends in the longitudinal direction of the guide rail 2 and the slide rail 3.

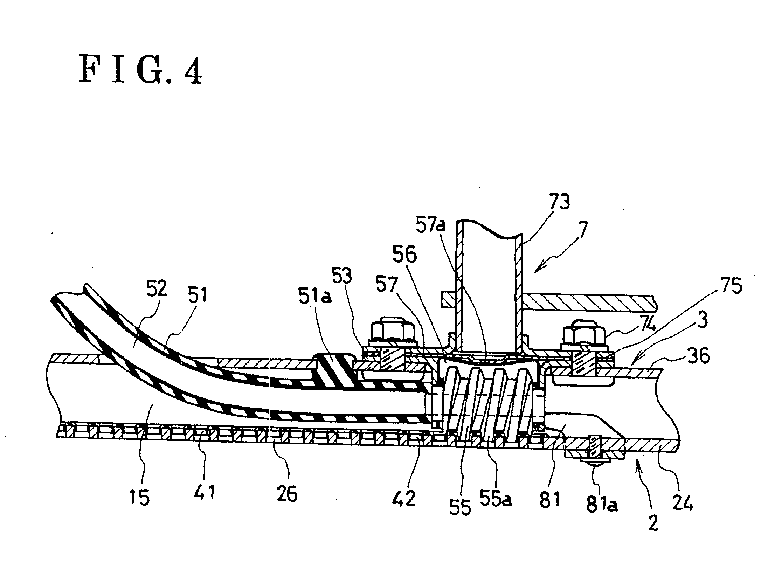

The drive screw 55 is rotatably supported at each of its ends by a support plate 53 and a bearing plate 54. Each support plate 53 is attached to the inner vertical wall 36 of the slide rail and the rear connecting member 7 by means of a bolt 75 and nut 74. Each bearing plate 54 is supported in a hole 53a formed in the support plate 53 so that they are slightly movable horizontally in the direction perpendicular to the axis of the drive screw 55 (vertical direction in Fig. 4). Additionally a hold plate 56 made of elastic material and molded so as to be approximately U-shaped is fitted by holes 56a at each of its ends to the bearing plates 54. A fixing plate 57, including a projecting portion 57a which presses the hold plate 56, is attached to the support plates 53. In this manner, the driving screw 55 is engaged with and pressed into a number of a plurality of engaging holes 26 formed in the guide rail 2.

There is a non-circular hole 55b through the axis of the drive screw 55. A matching non-circular key portion of the drive cable 52 is inserted into the hole 55b in the drive screw 55 so as to rotate the drive screw 55 by actuation from the drive source 58. As shown in Fig. 4, the drive cable 52 is housed in a cable case 51. One end of the cable case 51 is supported by the bracket 63a which is fixed to the front connecting member 6 and supports the drive source 58. The other end of the cable case 51 is supported at the inner vertical wall 36 of the slide rail 3 by means of a projecting boss 51a fitting in a hole 36a formed in the inner vertical wall 36. The slide rail 3 is thus slide relative to the guide rail 2 in the longitudinal direction of the seat 95 by the rotation of the drive screw 55.

As shown in Fig. 4 there are formed a plurality of engaging holes 26 in the outer vertical wall 24 of the guide rail 2 passing therethrough and being equally spaced in the longitudinal direction of the guide rail 2. There is also a slide member 41 which contains a plurality of collar portions 42 molded to be engaged with the plurality of engaging holes 26. Hooks 41a projecting in the vertical direction are provided at some of the collar portions 42. The top end of each hook 41 a is engaged with the edge of one of the plurality of engaging holes 26 so as to fix the slide member 41 to the guide rail 2. The plurality of engaging holes 26 are therefore covered by the plurality of collar portions 42 of the siding member 41 so that the drive screw 55 is engaged with the plurality of engaging holes 26 through the plurality of collar portions 42. The slide member 41 may be made of a low-friction material such as resin so as to minimize friction caused by rotation of the drive screw 55, thereby minimizing the amount of the lubricating grease that needs to be applied to the slide member 41. If the slide member 41 is made of material with a low enough coefficient of friction the lubricating grease can be entirely dispensed with. Additionally, in the above configuration, the plurality of engaging holes 26 are formed at the lower portion of the outer vertical wall 24 of the guide rail 2 so that soiling of the passenger's clothes by any applied lubricating grease or abrasive powder generated after the long-term use of the seat slide device 10 is prevented

As shown in Fig. 2 and Fig. 4 stoppers 81 are fixed with screws 81a to the outer vertical wall 24 of the guide rail 2 in a position adjacent to the both ends of the series of engaging holes 26. The stoppers 81 are penetrated through holes 82 (shown in Fig. 2) in the outer vertical wall 24 of the guide rail 2. When the slide rail 3 is slid relative to the guide rail 2 to a predetermined front position or a predetermined rear position one of the stoppers 81 engages with the side surface of one of the support plates 53 which support the drive screw 55 thereby preventing further movement of either the slide rail 3 or drive screw 55. Thus the movement of the drive screw 55 is limited by the stoppers 81 within a range from the predetermined front position to the predetermined rear position, thereby also limiting the length over which the slide rail 3 may longitudinally slide.

As shown in Fig. 2 and Fig. 5 a cover 44 for the depressed portion 27 is attached at the rear end of the guide rail 2. The cover 44 is fitted over a length of the guide rail 2 such that the drive screw 55 and peripheral members thereof do not interfere with the cover 44 when the slide rail 3 is moved to the backmost position of its movable range. As shown in Fig. 5 the cover 44 includes concave portions at its upper and lower edge portions which fit between the holder flange 22 of the guide rail 2 and the slide rail 3 and the lower hem guide flange 25 of the guide rail 2 and the slide rail 3 respectively. Furthermore a protruding boss 44b (shown in Fig. 2) formed at the side surface of the cover 44 is engaged with a hole 29 in the guide rail 2 so as to maintain the cover 44 in a predetermined position. The cover 44 further includes a cap portion 44a for covering the rear end portion of the guide rail 2, thereby hiding the inside of the assembly formed from the guide rail 2 and engaged slide rail 3 from the rear passenger's view.

The seat slide device 10 according to the present invention which has the above configuration is mounted to the vehicle as follows. The guide rail 2 provided at one side of the vehicle seat 95 is fixed by attaching means to a vertical surface of a locker portion 92 of the floor 9 and the guide rail 2 provided at the other side of the vehicle seat is fixed by attaching means to the facing vertical wall of the tunnel portion 91 at the center of the vehicle, such that the two guide rails 2 are parallel with each other and the desired sliding direction of the seat 95 and are the desired width apart. Slide rails 3 provided at both sides of the vehicle seat are firmly connected with the front connecting member 6 and the rear connecting member 7. As shown in Figs. 5 to 8, the guide rails 2 are each engaged with one of the slide rails 3 so that each individually forms an assembly whose height is greater than its width perpendicular to its longitudinal direction, thereby giving each assembly high stiffness against load applied in vertical direction. In the above configuration the seat slide device 10 also reinforces the floor 9 against excessive loads applied to the vehicle in a direction parallel to the front and rear connecting members 6 and 7 thus reducing any deformation of the vehicle shape due to such excessive loads and maintaining the passenger's space.

The seat slide device 10 according to the present invention is actuated by the operation of a switch apparatus (not shown) which activates the drive member 55 and adjusts the position of the seat 95 forwards or backwards in the longitudinal direction of the vehicle.

## Claims

1. A seat slide device (10) for a vehicle comprising:
a guide rail (2) which extends in the back/forth direction of the vehicle seat (95) and includes a fixed vertical side wall (24), the guide rail (2) being mountable on the vehicle floor (9); and
a slide rail (3) engaged with the guide rail (2) and guided to slide in the longitudinal direction of said guide rail (2), said slide rail (3) including a vertical side wall (36) displaced from the vertical side wall of the guide rail (2) and attachable to the vehicle seat (95),
a drive member (55) provided in a space (15) formed between the guide rail (2) and the slide rail (3) and rotatably supported by either one of said guide rail (2) and said slide rail (3), and
a driven engaging portion (26) which is to be engaged with said drive member (55) and is formed at the other of said guide rail (2) or said slide rail (3), **characterized in that:**
the drive member (55) is engaged with the driven engaging portion (26) through a slide member (41) attached to the driven engaging portion (26).

2. A seat slide device (10) according to Claim 1, wherein the vertical height of the assembly comprising the guide rail (2) and slide rail (3) is greater than the horizontal width as measured perpendicular to both side walls.

3. A seat slide device (10) according to either preceding claim, wherein the guide rail (2) includes the driven engaging portion (26) at the fixed vertical side wall (24) and flange portions (21,25) extending in the horizontal direction perpendicular to said fixed vertical side wall (24) at upper and lower portions of said fixed vertical side wall (24).

4. A seat slide device (10) according to Claim 3, further comprising:
a cover (44) connecting the upper and lower flange portions (21,25) of the guide rail (2) which extends along a portion of the guide rail (2) in the longitudinal direction (2) and covers some of the driven engaging portion (26).

5. A seat slide device (10) according to any preceding claim, further comprising:
a biasing member (56) urging the drive member (55) against the driven engaging portion.

6. A seat slide device (10) according to any preceding claim, further comprising:
a bearing track (23) provided between the guide rail (2) and the slide rail (3) separate from the space (15) provided between said guide rail (2) and said slide rail (3) in which the drive member (55) is rotatably supported, and
a plurality of bearing members (46) provided in said bearing track (23) and through which the slide rail (3) is slidably supported by the guide rail (2).

7. A seat slide device (10) according to any preceding claim, further comprising:
a connecting member (6,7) extending in the horizontal direction perpendicular to the vertical side wall (36) of the slide rail (3) and fixed to the vertical side wall (36) of the slide rail (3), said connecting member (6,7) supporting a drive device (50) coupled to the drive member (55) through a drive cable (52).

## Patentansprüche

1. Sitzgleitschienenvorrichtung (10) für ein Fahrzeug mit:
einer Führungsschiene (2), die sich in der Rückwärts-/Vorwärtsrichtung des Fahrzeugsitzes (95) erstreckt, und die eine befestigte senkrechte Seitenwand (24) aufweist, wobei die Führungsschiene (2) an dem Fahrzeugboden (9) montierbar ist; und
einer Gleitschiene (3), die mit der Führungsschiene (2) im Eingriff ist, und die geführt ist, um in der längsverlaufenden Richtung der Führungsschiene (2) zu gleiten, wobei die Gleitschiene (3) eine senkrechte Seitenwand (36) aufweist, die von der senkrechten Seitenwand der Führungsschiene (2) versetzt ist, und die an den Fahrzeugsitz (95) anfügbar ist,
einem Antriebselement (55), das in einem zwischen der Führungsschiene (2) und der Gleitschiene (3) ausgebildeten Raum (15) vorgesehen ist, und das durch eine von beiden von der Führungsschiene (2) und der Gleitschiene (3) drehbar gestützt ist, und
einem angetriebenen Eingriffsabschnitt (26), der mit dem Antriebselement (55) in Eingriff gebracht werden soll, und der an der anderen Schiene von der Führungsschiene (2) oder der Gleitschiene (3) ausgebildet ist,
**dadurch gekennzeichnet, dass**
das Antriebselement (55) durch ein Gleitelement (41), das an dem angetriebenen Eingriffsabschnitt (26) angefügt ist, mit dem angetriebenen Eingriffsabschnitt (26) im Eingriff ist.

2. Sitzgleitschienenvorrichtung (10) gemäß Anspruch 1, wobei die senkrechte Höhe der Baugruppe, die die Führungsschiene (2) und Gleitschiene (3) aufweist, größer als die waagrechte Breite ist, wenn diese senkrecht zu beiden Seitenwänden gemessen wird.

3. Sitzgleitschienenvorrichtung (10) gemäß irgendeinem vorangehenden Anspruch, wobei die Führungsschiene (2) den angetriebenen Eingriffsabschnitt (26) an der befestigten senkrechten Seitenwand (24) und Flanschabschnitte (21, 25) aufweist, die sich in der waagrechten Richtung senkrecht zu der befestigten senkrechten Seitenwand (24) an oberen und unteren Abschnitten der befestigten senkrechten Seitenwand (24) erstrecken.

4. Sitzgleitschienenvorrichtung (10) gemäß Anspruch 3, die ferner folgendes aufweist:
eine Abdeckung (44), die die oberen und unteren Flanschabschnitte (21, 25) der Führungsschiene (2) verbindet, wobei die Abdeckung sich entlang einem Abschnitt der Führungsschiene (2) in der längsverlaufenden Richtung (2) erstreckt und einen Teil des angetriebenen Eingriffabschnitts (26) abdeckt.

5. Sitzgleitschienenvorrichtung (10) gemäß irgendeinem vorangehenden Anspruch, die ferner folgendes aufweist:
ein Vorspannelement (56), das das Antriebselement (55) gegen den angetriebenen Eingriffsabschnitt drängt.

6. Sitzgleitschienenvorrichtung (10) gemäß irgendeinem vorangehenden Anspruch, die weiter folgendes aufweist:
eine Lagerbahn (23), die zwischen der Führungsschiene (2) und der Gleitschiene (3) getrennt von dem Raum (15) vorgesehen ist, der zwischen der Führungsschiene (2) und der Gleitschiene (3) vorgesehen ist, in dem das Antriebselement (55) drehbar gestützt ist, und
eine Vielzahl von Lagerelementen (26), die in der Lagerbahn (23) vorgesehen sind, und durch die die Gleitschiene (3) durch die Führungsschiene (2) gleitend gestützt ist.

7. Sitzgleitschienenvorrichtung (10) gemäß irgendeinem vorangehenden Anspruch, die weiter folgendes aufweist:
ein Verbindungselement (6, 7), das sich in der waagrechten Richtung senkrecht zu der senkrechten Seitenwand (36) der Gleitschiene (3) erstreckt, und das an der senkrechten Seitenwand (36) der Gleitschiene (3) befestigt ist, wobei das Verbindungselement (6, 7) eine Antriebsvorrichtung (50) stützt, die durch ein Antriebskabel (52) mit dem Antriebselement (55) verbunden ist.

## Revendications

1. Dispositif de glissière de siège (10) pour un véhicule comprenant :
un rail de guidage (2) qui s'étend dans la direction d'arrière en avant du siège du véhicule (95) et comprend une paroi latérale verticale fixe (24), le rail de guidage (2) étant montable sur le plancher du véhicule (9) ; et
une glissière de guidage (3) engagée avec le rail de guidage (2) et guidée pour coulisser dans la direction longitudinale dudit rail de guidage (2), ladite glissière de guidage (3) comprenant une paroi latérale verticale (36) déplacée depuis la paroi latérale verticale du rail de guidage (2) et attachable au siège du véhicule (95),
un élément d'entraînement (55) fourni dans un espace (15) formé entre le rail de guidage (2) et la glissière de guidage (3) et supporté de façon rotative par l'un dudit rail de guidage (2) et de ladite glissière de guidage (3), et
une partie d'engagement entraînée (26) qui est destinée à être engagée avec ledit élément d'entraînement (55) et qui est formée à l'autre dudit rail de guidage (2) ou de ladite glissière de guidage (3),
**caractérisé en ce que** :
l'élément d'entraînement (55) est engagé avec la partie d'engagement entraînée (26) à travers un élément coulissant (41) attaché à la partie d'engagement entraînée (26).

2. Dispositif de glissière de siège (10) selon la revendication 1, dans lequel la hauteur verticale de l'ensemble comprenant le rail de guidage (2) et la glissière de guidage (3) est plus grande que la largeur horizontale mesurée de façon perpendiculaire aux deux parois latérales.

3. Dispositif de glissière de siège (10) selon l'une quelconque des revendications précédentes, dans lequel le rail de guidage (2) comprend la partie d'engagement entraînée (26), à la paroi latérale verticale fixe (24) et des parties de flasque (21, 25) s'étendant dans la direction horizontale perpendiculaire à ladite paroi latérale verticale (24) aux parties supérieure et inférieure de ladite paroi latérale verticale fixe (24).

4. Dispositif de glissière de siège (10) selon la revendication 3, comprenant de plus :
un couvercle (44) connectant les parties supérieure et inférieure (21, 25) du rail de guidage (2) qui s'étend le long d'une partie du rail de guidage (2) dans la direction longitudinale (2) et couvre une partie de la partie d'engagement entraînée (26).

5. Dispositif de glissière de siège (10) selon l'une quelconque des revendications précédentes, comprenant de plus :
un élément d'écartement (56) pressant l'élément d'entraînement (55) contre la partie d'engagement entraînée.

6. Dispositif de glissière de siège (10) selon la revendication 3, comprenant de plus :
une voie d'appui (23) fournie entre le rail de guidage (2) et la glissière de guidage (3) séparé de l'espace (15) fourni entre ledit rail de guidage (2) et ladite glissière de guidage (3) dans lesquels ledit élément de guidage (55) est supporté de façon rotative, et
une pluralité d'éléments d'appui (46) fournis dans ladite voie d'appui (23) et par l'intermédiaire desquels la glissière de guidage (3) est supportée de façon coulissante au moyen du rail de guidage (2).

7. Dispositif de glissière de siège (10) selon la revendication 3, comprenant de plus :
un élément de connexion (6, 7) s'étendant dans la direction horizontale perpendiculaire à la paroi latérale verticale (36) de la glissière de guidage (3) et fixée à la paroi latérale verticale (36) de la glissière de guidage (3), ledit élément de connexion (6, 7) supportant un dispositif d'entraînement (50) couplé à l'élément d'entraînement (55) par l'intermédiaire d'un câble d'entraînement (52).
